Europäisches Patentamt

European Patent Office

Office européen des brevets

(11) Publication number: **0 044 452**
A1

## (12) EUROPEAN PATENT APPLICATION

(21) Application number: **81105160.6**

(22) Date of filing: **03.07.81**

(51) Int. Cl.³: **B 60 J 3/02**

(30) Priority: **18.07.80 IT 5340780**

(43) Date of publication of application:
**27.01.82 Bulletin 82/4**

(84) Designated Contracting States:
**DE FR GB SE**

(71) Applicant: **LEAR S.n.c. di FOGGINI & C.
Strada del Bottone, 20
I-10043 Orbassano (Province of Torino)(IT)**

(72) Inventor: **Foggini, Giovanni
Corso Matteotti 23
I-10100 Torino(IT)**

(74) Representative: **Modiano, Guido et al,
MODIANO & ASSOCIATI S.A.S. Via Meravigli, 16
I-20123 Milan(IT)**

(54) Sun visor, particularly for motorvehicles.

(57) The sun visor (10) comprises a rectilinear cell extruded load-bearing structure supported on a rod (130) pivotally inserted in the rectilinear cells in frictional engagement therewith, the load-bearing structure carrying an elastically yielding metal lamina (15) caused to adhere in forced contact engagement to a corresponding portion (131) of the supporting rod (130) in such a way as to provide at least one auxiliary friction component for the frictional engagement between the sun visor bearing structure and the supporting rod.

Fig. 1

EP 0 044 452 A1

COMPLETE DOCUMENT

Croydon Printing Company Ltd.

This invention relates to a sun visor, particularly for motorvehicles.

Published Italian Application No. 69287-A/78 by the same Applicant discloses a sun visor characterized in that it comprises a load-bearing structure made up of a shaped element formed by die-cutting from a sheet of a cellular polymeric material which is extruded continuously; the cells therein being rectilinear, parallel, and trough-like.

In accordance with the foregoing patent application, also provided are attaching means comprising at least one rod formed from a round metal bar, which is inserted, over a straight portion of suitable length, into one of the trough-like cells such as to create a hinge system useful both for suspending the visor and attaching it in frictional engagement; said engagement being achieved by simple friction contact between the rod and inside surface of the cellular trough.

This invention is directed to providing an improved constructional modifications, whereby said load-bearing structure of the sun visor includes at least one elastically yielding metal lamina, advantageously of steel, which is caused to adhere in forced contact engagement with a corresponding portion of the rod, to provide at least one auxiliary friction component for the frictional engagement, said rod portion being external to the cell containing said rod.

According to an advantageous embodiment of the invention, that portion of the rod which is engaged by the foil is of prismatic shape, thereby said lamina and said portion cooperate in defining a series of stable angular setting positions for the sun visor.

The invention will be more clearly understood from the detailed description which follows, with reference to the accompanying drawings, where:

Figure 1 is a partly sectional elevation view of the sun visor according to this invention; and

Figure 2 is a perspective view showing a detail of Figure 1.

As described in the foregoing patent application, the sun visor 10 according to this invention comprises an internal load-bearing structure 11 formed from a polymeric material and covered with a sheathing 12 which envelopes and encloses said structure, and suspension and hinge-connection means generally indicated at 13. The structure 11 includes a shaped element matching the peripheral contour of the visor and being formed by die-cutting from an extruded cellular sheet characterized by the presence of parallel continuous cells $a$ bordered by parallel ribs $n$ included between two sheets $f_1$-$f_2$ facing each other. The suspension means 13 comprises a cylindrical metal rod 130 which is simply force fitted into one of said cells such as to create a hinge connection with frictional engagement, thereby the visor can be tilted about the common axis of the cell and rod inserted therein.

One end of the rod 130 protrudes from the visor, and engages a corresponding seat of a positioning hinge 20 where the visor suspension is of the side swinging type.

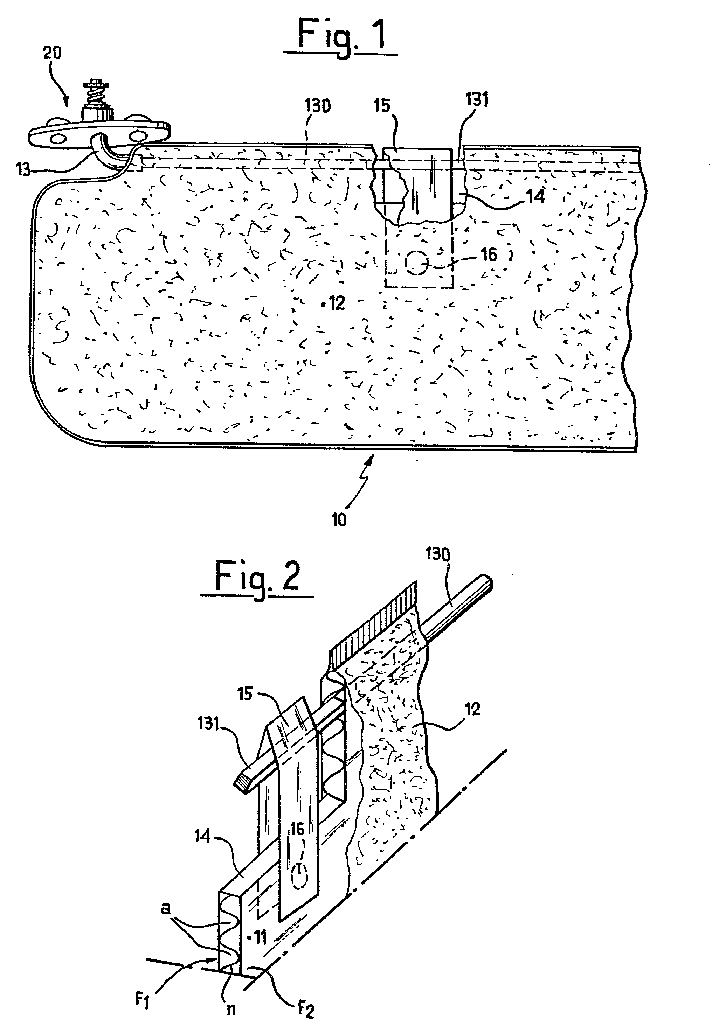

According to the invention, in the load-bearing element 11, there is formed a cutout 14 of saddle-like configuration, which leaves uncovered a corresponding portion 131 of the rod 130. On said rod portion, there acts at least one elastically yielding metal lamina 15 -- advantageously formed from spring steel -- which has one end rigidly connected to the structure 11 as by rivets 16. The other portion of the lamina is caused to adhere in forced contact relationship against the portion 131 of the rod, thus providing at least one auxiliary friction component for the frictional engagement between the rod and cell. Advantageously, the lamina 15 has a V-like configuration and is set astride the portion 131 of the rod as clearly shown in Figure 2. Furthermore, the portion 131 has preferably a prismatic shape, thereby the lamina and rod portion can cooperate in defining a series a stable angular setting positions for the sun visor.

Of course, all the effects of the present application will also apply to any other embodiments of the same basic inventive concept.

## CLAIMS

1. A sun visor particularly for motorvehicles, comprising a load-bearing structure (11) extruded with rectilinear cells, and suspension and attachement means including a rod (130) pivotally inserted into one of said cells in frictional engagement therewith, characterized in that said load-bearing structure (11) carries at least one elastically yielding metal lamina (15) which is caused to adhere in forced contact engagement·to a corresponding portion of said rod (130), to thus provide at least one auxiliary friction component for the frictional engagement, said rod portion being external to the cell containing said rod (130).

2. A sun visor according to Claim 1, wherein said lamina (15) has a V-like configuration and is set astride the corresponding rod (130) portion (131) in engagement therewith.

3. A sun visor according to Claim 1 and 2, wherein said rod portion (131) is of prismatic shape, thereby said lamina and said rod portion (131) cooperate in defining a series of stable angular setting positions for the sun visor.

## Fig. 1

## Fig. 2

# 0044452

European Patent Office

**EUROPEAN SEARCH REPORT**

Application number

EP 81 10 5160

## DOCUMENTS CONSIDERED TO BE RELEVANT

| Category | Citation of document with indication, where appropriate, of relevant passages | Relevant to claim |
|---|---|---|
| D | FR - A - 2 437 950 (LEAR S.N.C.) <br> * Whole document * <br> & GB - A - 2 032 368 <br> -- | |
| | GB - A - 1 354 485 (CHRYSLER) <br> * Claims 1,2,4 * <br> -- | 1,3 |
| | DE - B - 1 480 397 (V.W.) <br> * Claims 1,2; figures * <br> -- | 1,2 |
| | FR - A - 2 243 089 (ITT) <br> * Claim 1; figure 2 * <br> & GB - A - 1 432 287 <br> -- | 1 |
| | GB - A - 1 452 220 (HAPPICH) <br> * Claims 1,4,6 * <br> ---- | 1 |

### CLASSIFICATION OF THE APPLICATION (Int. Cl.³)

B 60 J 3/02

### TECHNICAL FIELDS SEARCHED (Int. Cl.³)

B 60 J
F 16 C

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 15-10-1981 | SCHMITTER |

EPO Form 1503 1   06.78